# EUROPÄISCHE PATENTSCHRIFT

(11) **EP 0 713 046 B1**
(45) Veröffentlichungstag und Bekanntmachung des Hinweises auf die Patenterteilung: **21.02.2001**
(21) Anmeldenummer: 95117434.1
(22) Anmeldetag: 06.11.1995
(51) Int. Cl.: F16L 55/033, F01N 1/08, F01N 1/02

(54) **Vorrichtung zur Schalldämmung in Rohrleitungen**
Silencing arrangement for pipelines
Dispositif de silencieux pour tuyaux

(30) Priorität: 17.11.1994 DE 4440918
(43) Veröffentlichungstag der Anmeldung: 22.05.1996
(73) Patentinhaber: BAYER AG, 51368 Leverkusen (DE)
(72) Erfinder: Fischer, Andreas, D-41542 Dormagen (DE); Müller, Susanne, Dr., D-40789 Monheim (DE); Strassen, Werner, D-40882 Ratingen (DE)

(56) Entgegenhaltungen:
- US-A- 1 514 441
- US-A- 2 043 030
- US-A- 2 218 959

## Beschreibung

Die Erfindung betrifft eine Vorrichtung zur Schalldämmung in Rohrleitungen, die auf einem innerhalb einer Kammer angeordneten Resonanzschalldämpfer beruht. Die Kammer ist in eine schallführende Rohrleitung eingebaut, die an der Eintrittsseite mit einem Rohrleitungsstück in die Kammer hineinragt und am Kammeraustritt mit einer Austrittsöffnung in der Kammer verbunden ist.

In der Literatur werden verschiedene Typen von Resonanzschalldämpfern zur Reduzierung der Schallemission beschrieben (siehe z. B. H. Schmidt; Schalltechnisches Taschenbuch; 4. Auflage 1989). Ein spezieller Resonatortyp ist der sogenannte Pfeifenresonator, dessen Wirkungsweise auf einer Interferenz zwischen der ankommenden Schallwelle in einer Rohrleitung und einer reflektierten Schallwelle beruht. Die Reflektion findet dabei in einer an die Rohrleitung angekoppelten Resonatorkammer statt. In einer unendlich langen Rohrleitung breiten sich Schallwellen unterhalb der Grenzfrequenz des Kanals, die durch deren geometrische Querabmessungen gegeben sind, als fortschreitende, ebene Welle aus. Tritt im Kanal eine Diskontinuität, z.B. ein plötzlicher Querschnittssprung, Stichleitung usw. auf, so wird die auftreffende Schallwelle infolge der Impedanzänderung teilweise oder völlig reflektiert. Es tritt eine Schalldämmung auf, wie sie z. B. an einer Wand vorhanden ist.

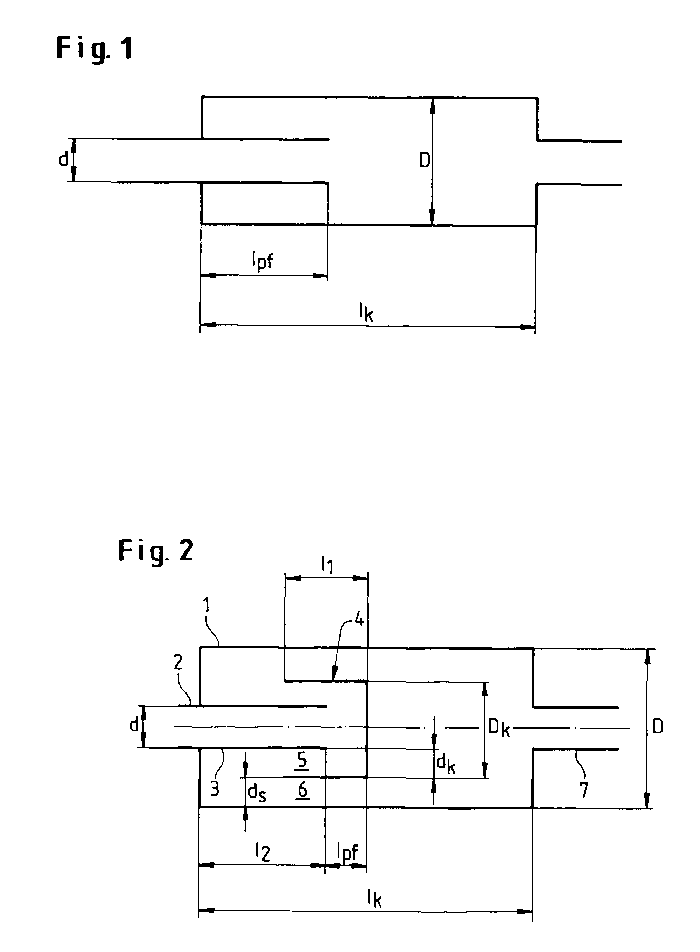

Bei einem konventionellen Pfeifenresonator, wie er in Fig. 1 dargestellt ist, bestimmen die Querabmessungen D des Pfeifenresonators den wirksamen Frequenzbereich (s. z.B. Zeitschrift für Lärmbekämpfung, Ausgabe 40 (1993), 99 bis 102 ). Oberhalb einer oberen Grenzfrequenz f_{og} = k ∗ c / l_{q} ist dieser Schalldämpfertyp nicht mehr wirksam. Dabei ist k = 0,6 bei runden Rohren und k = 0,5 bei rechteckigen Rohren, c die Schallgeschwindigkeit und l_{q} die größte Querabmessung (d.i. bei runden Rohren der Kammerdurchmesser). Bereits bei sehr geringen Kammerdurchmessern D ist die Wirkung nur auf den tieffrequenten Bereich beschränkt (z.B. beträgt bei D = 300 mm die obere Grenzfrequenz f_{og} = 600 Hz). Zudem ist die Wirkungsweise auf einzelne Frequenzen unterhalb der oberen Grenzfrequenz beschränkt. Dämpfungsmaxima sind relativ schmalbandig bei den Resonanzfrequenzen fᵣ = ë/4 (ë = Wellenlänge) und den ungeradzahligen Vielfachen von ë/4 - unter Berücksichtigung der Mündungskorrektur - zu erwarten. In den übrigen Frequenzbereichen liegt nur eine sehr geringe bzw. gar keine Pegelminderung vor.

In US 2 043 030 und US 2 075 265 sowie in DE 42 43 280 werden spezielle Ausführungsformen von Pfeifenresonatoren beschrieben. In der Patentschrift US-A 20 43 030 wird speziell eine Vorrichtung zur Schalldämmung in Rohrleitungen beschrieben, mit einer in die Rohrleitung eingesetzten Kammer, die ein in die Kammer hineinragendes Rohrleitungsstück am Kammereintritt und eine mit dem fortgesetzten Teil der Rohrleitung verbundene Austrittsöffnung am Kammerausgang aufweist. In der Kammer ist gegenüber der Mündung des Rohrleitungsstücks eine als Pfeifenresonator ausgebildete Abdeckkappe angeordnet, deren Seitenwand das Rohrleitungsstück auf einem Teil seiner Länge konzentrisch derart umschließt, dass zwischen der Seitenwand und dem Rohrstück ein Ringkanal mit der lichten Weite dₖ verbleibt, wobei die Durchmesser Dₖ der Abdeckkappe und d des Rohrleitungsstücks, die lichte Weite dₖ des Ringkanals und der Abstand l_{pf} zwischen der Mündung des Rohrleitungsstücks und der Abdeckkappe in Abhängigkeit der oberen Grenzfrequenz f_{og} der zu dämmenden Schallwellen so dimensioniert werden, dass die Ungleichungen dₖ <= d und dₖ <= l_{pf} erfüllt sind. Auch bei diesen Ausführungen ist jedoch eine Pegelminderung im hochfrequenten Bereich > 1000 Hz nur eingeschränkt bei geringen Durchmessern der Rohrleitung oder mit sehr hohem Fertigungsaufwand möglich (z.B. Einsatz von Schottblechen bzw. Aufteilung des Kanals in kleine Einzelkanäle).

Andere Schalldämpfertypen, z.B. Absorptionsschalldämpfer, wie sie in DE 35 09 033 beschrieben sind, wirken zwar im hochfrequenten Bereich; jedoch sind diese vor allem bei feuchten oder produktbelasteten Medien nur mit starken Einschränkungen einsetzbar.

Auch mit dem in der deutschen Offenlegungsschrift 42 10 786 beschriebenen Schalldämpferprinzip wird im Frequenzbereich > 1000 Hz keine befriedigende Dämpfung erreicht.

Es bestand daher die Aufgabe, einen Resonanzschalldämpfer zu entwickeln, dessen obere Grenzfrequenz unabhängig von den Rohrleitungsabmessungen ist und der gleichzeitig ohne die Verwendung von Absorptionsmaterial deutliche Pegelminderungen bewirkt.

Diese Aufgabe wird, ausgehend von der eingangs beschriebenen Vorrichtung zur Schalldämmung in Rohrleitungen, bei der in der Kammer gegenüber der Mündung des Rohrleitungsstücks eine als Pfeifenresonator ausgebildetete Abdeckkappe angeordnet ist, deren Seitenwand das Rohrleitungsstück auf einem Teil seiner Länge konzentrisch derart umschließt, dass zwischen der Seitenwand und dem Rohrstück ein Ringkanal mit der lichten Weite dₖ verbleibt, wobei die Durchmesser D_{K} der Abdeckkappe und d des Rohrleitungsstücks, die lichte Weite dₖ des Ringkanals und der Abstand l_{pf} zwischen der Mündung des Rohrleitungsstücks und der Abdeckkappe in Abhängigkeit der oberen Grenzfrequenz f_{og} der zu dämmenden Schallwellen so dimensioniert werden, dass
a) die Ungleichungen dₖ <= d und dₖ <= l_{pf}
   erfüllt sind, erfindungsgemäß dadurch gelöst, dass gleichzeitig die Ungleichung l_{pf} <= d und
b) die Gleichung D_{K} = d + 2 ∗ dₖ/(2 ∗ f_{og})
   erfüllt sind.

Bei der erfindungsgemäßen Problemlösung ist die obere Grenzfrequenz f_{og} des Pfeifenresonators nicht mehr von der größten Querabmessung und damit dem Durchmesser D der Kammer abhängig. Vielmehr wird die obere Grenzfrequenz durch den Durchmesser d der Rohrleitung und durch die lichte Weite dₖ des Ringkanals zwischen der Mantelfläche der Kappe und dem in die Kammer hineinragenden Rohrstück bestimmt.

Es reicht also aus, wenn die Parameter d oder dₖ die beiden obengenannten Bedingungen erfüllen. Besonders gute Ergebnisse werden erzielt, wenn die lichte Weite dₛ des Ringspalts zwischen der Abdeckkappe und der Innenwand der Kammer mit der lichten Weite dₖ des Ringkanals zwischen der Abdeckkappe und dem Rohrleitungsstück übereinstimmt. Der optimale Abstand l_{pf} zwischen der Abdeckkappe und der Mündung des Rohrstücks wird wie bei einem konventionellen Pfeifenresonator unter Berücksichtigung der Mündungskorrektur dimensioniert. Durch geeignete Dimensionierung und Anbringung der Abdeckkappe kann also das Dämpfungsverhalten in einfacher Weise an eine durch die Schallquelle vorgegebene obere Grenzfrequenz angepasst werden.

Eine weitere Verbesserung wird erreicht, wenn der Ringspalt zwischen der Abdeckkappe und der Innenwand der Kammer als Interferenzdämpfer für die vorgegebene Schallfrequenz ausgebildet ist und hinsichtlich seiner Länge l₁ so dimensioniert wird, daß die Gleichung l₁ = c/(4 ∗ fᵣ) erfüllt ist, wobei c die Schallgeschwindigkeit und fᵣ die vorgegebene Schallfrequenz der zu dämmenden Schallwellen ist. Vorzugsweise beträgt dabei die Länge l₁ des Ringspalts das Doppelte des Abstands l_{pf} zwischen der Mündung des Rohrleitungsstücks und der Abdeckkappe.

Die Wände der Abdeckkappe brauchen nicht massiv zu sein. Sie können auch aus Lochblechen bestehen. Die Kappenfläche kann auch leicht gekrümmt sein. In diesem Fall wird das Resonanzmaximum etwas verbreitert, was in vielen Fällen erwünscht ist.

Vorzugsweise wird der erfindungsgemäße Schalldämpfer mit Pfeifenresonatoren in bekannter Bauweise kombiniert. Zu diesem Zweck ist am Kammerausgang ebenfalls ein in die Kammer hineinragendes Rohrleitungsstück angebracht. Bei geeigneter Dimensionierung ist dann eine Pegelminderung breitbandig bei tiefen Frequenzen und auch bei hohen Frequenzen möglich.

Als besonders vorteilhaft hat es sich erwiesen, wenn zwei erfindungsgemäße Schalldämpfersysteme innerhalb einer Kammer hintereinandergeschaltet werden, d.h. wenn gegenüber der Mündung des Rohrleitungsstücks am Kammerausgang ein weiterer, in gleicher Weise dimensionierter Pfeifenresonator angeordnet ist, so daß die Kammer zwei seriell hintereinander geschaltete Pfeifenresonatoren aufweist.

Durch bevorzugte Kombination mit Absorptionsschalldämpfern ist ebenfalls eine breitbandigere Wirkung und zudem eine zusätzliche Verbesserung im hochfrequenten Bereich zu erzielen.

Eine weitere bevorzugte Variante ist die Kombination mit einem Helmholtzresonator. Diese Variante kann in der Weise realisiert werden, daß zwischen den beiden Pfeifenresonatoren ein auf die Schallfrequenz der zu dämmenden Schallwellen abgestimmter Helmholtzresonator angeordnet wird. Auch hier kann bei geeigneter Dimensionierung ein breitbandiger Frequenzbereich gedämmt werden.

Zur Reduzierung der Druckverluste werden die Pfeifenresonatoren bevorzugt parallel in einer gemeinsamen Kammer angeordnet. Zu diesem Zweck ist die Kammer mit einer Trennwand versehen, in die ein oder mehrere parallel geschaltete Rohrstücke mit darüber angeordneten Abdeckkappen eingebaut sind.

Im folgenden wird die Erfindung anhand von Ausführungsbeispielen und Zeichnungen näher erläutert.

Es zeigen:
- Fig. 1: einen Pfeifenresonator konventioneller Bauart
- Fig. 2: die Anordnung des Schalldämpfers in einer geschlossenen Rohrleitung
- Fig. 3: eine Reihenschaltung von 2 Schalldämpfern in einer Kammer
- Fig. 4 und 5: verschiedene Kombinationsmöglichkeiten mit einem konventionellen Pfeifenresonator
- Fig. 6 und 7: bevorzugte Ausführungen des Schalldämpfers in Kombination mit einem Absorptionsschalldämpfer
- Fig. 8: eine Kombination aus in Reihe geschalteten Schalldämpfern mit einer Helmholtzpfeife und
- Fig. 9: eine parallele Anordnung von Schalldämpfern in der Kammer

Gemäß Fig. 2 besteht der Schalldämpfer in der einfachsten Ausführung aus einer Kammer 1, mit der die Rohrleitung 2 über ein in die Kammer 1 hineinragendes Rohrstück 3 verbunden ist. Im Abstand l_{pf} von der Mündung des hereinragenden Rohrstückes 3 ist eine Abdeckkappe 4 mit dem Durchmesser Dₖ und der Länge l₁ angebracht. Die Kappe 4 ist hierbei zur Minderung der Druckverluste bevorzugt ganz oder teilweise aus Lochblech gefertigt, dessen Lochflächenanteil < 40 % beträgt. Der Abstand l_{pf}, die Länge der Abdeckkappe l₁ und die Länge des Rohrstücks l₂ , sowie der Durchmesser D der Kammer 1 werden hierbei nach bekannten Kriterien so festgelegt, daß eine günstige schalldämmende Wirkung unter Berücksichtigung einer strömungstechnisch günstigen Ausführung des Gesamtsystems vorliegt. Der Ringkanal 5 mit der lichten Weite dₖ zwischen der Mantelfläche der Kappe 4 und der Außenfläche des in die Kammer 1 hineinragenden Rohrstücks 3 wird unter Berücksichtigung der gewünschten oberen Grenzfrequenz f_{og} ( = höchste im Schallspektrum vorkommende Frequenz, die gedämmt werden soll) nach folgender Formel dimensioniert:
Dₖ = d + 2 ∗ (c/(2 ∗ f_{og} )). Dabei bedeutet c die Schallgeschwindigkeit in der Rohrleitung. Darüberhinaus wird der Ringspalt 6 (Spaltweite dₛ ) zwischen der Kappe 4 und der Kammer 1 so dimensioniert, daß er als Interferenzdämpfer wirkt. Dies erreicht man dadurch, daß die Länge l₁ der Abdeckkappe in Übereinstimmung mit der Gleichung l₁ = c/(4 ∗ fᵣ ) gewählt wird, wobei c die Schallgeschwindigkeit und fᵣ die vorgegebene Schallfrequenz der zu dämmenden Schallwellen ist.

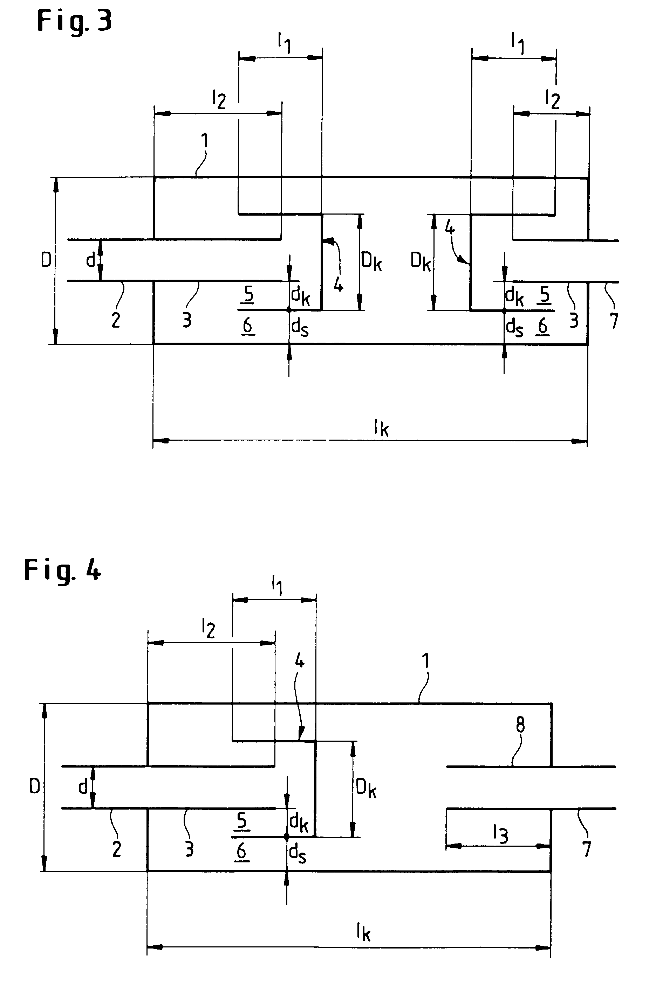

Fig. 3 zeigt die Hintereinanderschaltung von zwei Schalldämpfersystemen, bestehend aus jeweils einem Rohrstück 3 und einer Abdeckkappe 4 in einer gemeinsamen Kammer 1. Die beiden Schalldämpfersysteme können hierbei abhängig von der Aufgabenstellung gleich oder unterschiedlich zu der oben beschriebenen Ausführung (Fig. 2 ) dimensioniert werden.

Gemäß Fig. 4 wird zum einen das in die Kammer 1 hineinragende Rohrstück 3 mit einer Kappe 4 ausgestattet und wie oben beschrieben dimensioniert. Zum anderen ragt das an den fortgesetzten Teil 7 der Rohrleitung angeschlossene Rohrstück 8 in die Kammer 1 hinein, so daß in Kombination mit dem vorangehenden Schalldämpfer ein konventioneller Pfeifenresonator gebildet wird. Durch passende Wahl der Länge l₃ des Rohrstücks 8 werden die zusätzlichen Resonanzfrequenzen des konventionellen Pfeifenresonators festgelegt, bei denen eine Dämmung erfolgen soll.

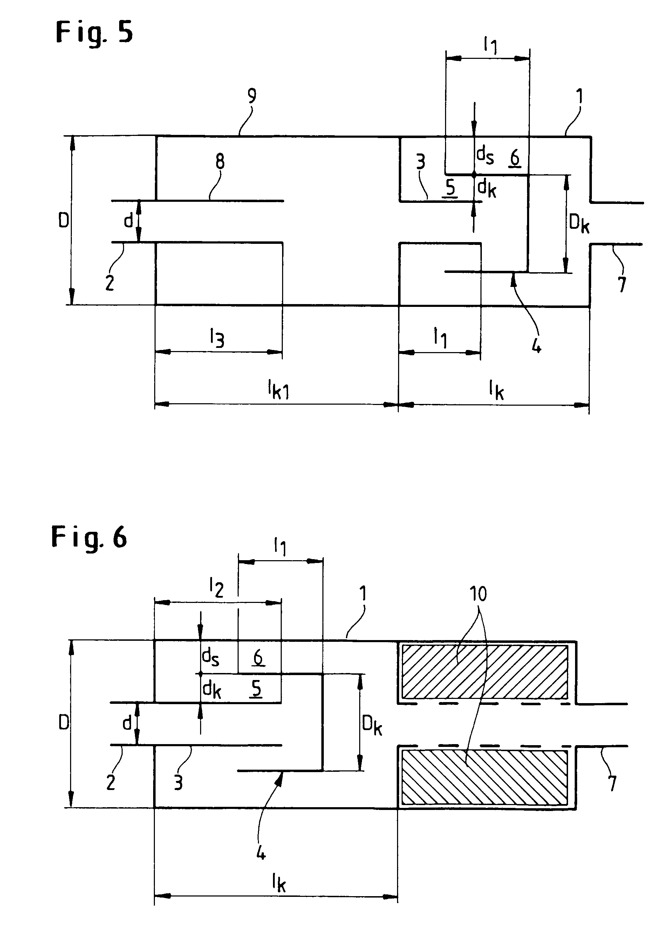

Fig. 5 zeigt ebenfall einen konventionellen Pfeifenresonator mit einem Rohrstück 8, welches in die Pfeifenresonatorkammer 9 hereinragt. Die Pfeifenresonatorkammer 9 ist direkt mit der Kammer 1 verbunden. Das in die Kammer 1 hereinragende Rohrstück 3 wird wieder mit einer Abdeckkappe 4 ausgestattet und wie oben beschrieben dimensioniert. Mit Hilfe der Länge l₃ des Rohrstücks 8 werden zusätzliche Resonanzfrequenzen festgelegt, bei denen eine Dämpfung erfolgen soll.

Fig. 6 zeigt eine mögliche Kombination des Schalldämpfersystems, bestehend aus dem Rohrstück 3 und der Abdeckkappe 4, mit einem Absorptionsschalldämpfer 10, der sich in bekannter Weise an den Kammerausgang anschließt.

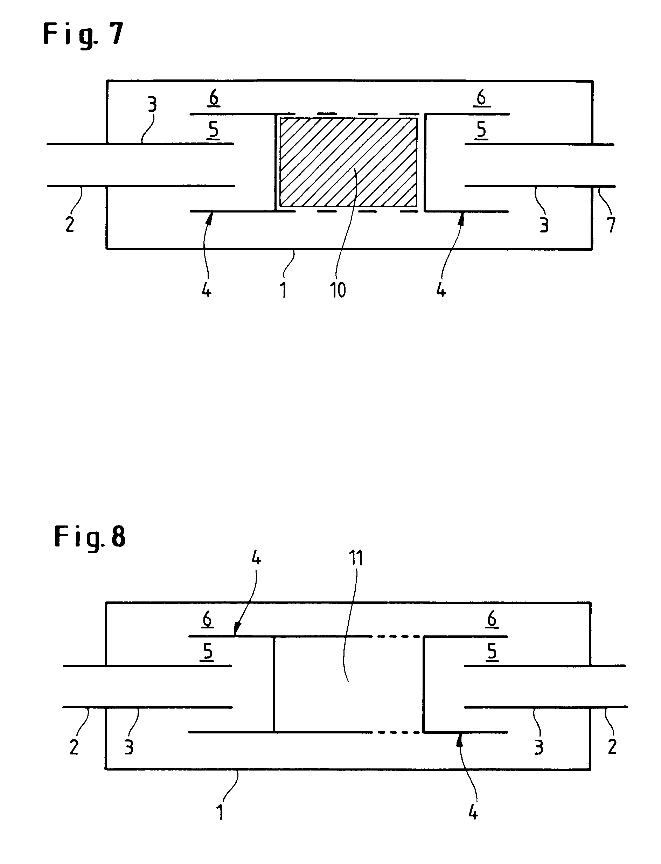

Gemäß Fig. 7 ist der Absorptionsschalldämpfer 10 in der Kammer 1 zwischen den Abdeckkappen 4 zweier aufeinanderfolgender Resonanzschalldämpfer angeordnet.

Fig. 8 zeigt eine besonders wirksame Kombination der erfindungsgemäßen Schalldämpfers mit einem Helmholtzresonator. Der Helmholtzresonator 11 ist hier zwischen den beiden Abdeckkappen 4 angeordnet. Eine von üblichen Helmholtzresonatoren abweichende Ausführung ist in DE 42 10 786 beschrieben worden. Diese Bauform hat sich auch im vorliegenden Fall besonders gut bewährt.

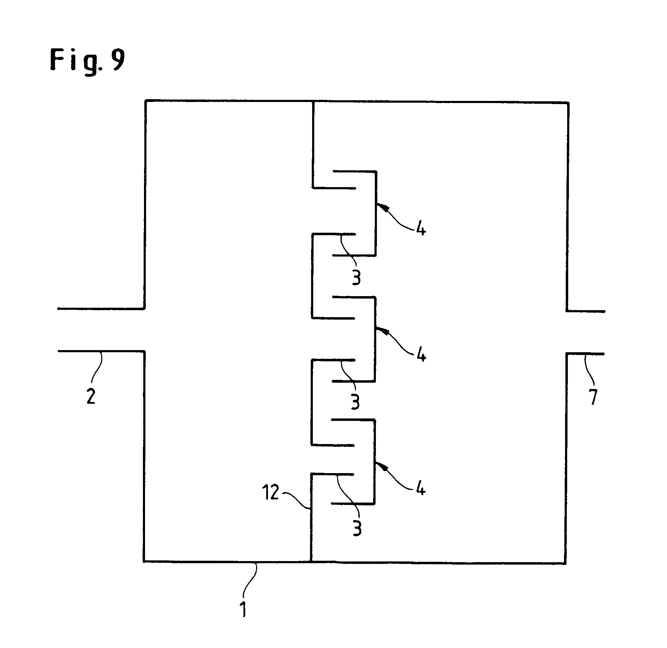

Eine weitere Ausführungsform der Erfindung ist in Fig. 9 dargestellt. Die Kammer 1 ist hier mit einer Trennwand 12 versehen, in die mehrere, parallel geschaltete Rohrstücke 3 mit darüber angeordneten Abdeckkappen 4 eingebaut sind. Diese Variante hat den Vorteil, daß der freie Strömungsquerschnitt beliebig dimensioniert werden kann, um eine Reduktion der Strömungsgeschwindigkeit und damit der Druckverluste zu bewirken.

Die vorstehend beschriebenen Ausführungsbeispiele beziehen sich auf runde Rohrleitungen und Kammern. Es leuchtet jedoch ein, daß die erfindungsgemäße Schalldämmung zumindest auch bei schachtförmigen Rohrleitungen mit quadratischem oder nahezu quadratischem Querschnitt Anwendung finden kann. An die Stelle des Durchmessers treten dann die Schachtabmessungen und die größte Querabmessung der in den schallführenden Schacht eingebauten Kammer.

## Patentansprüche

1. Vorrichtung zur Schalldämmung in Rohrleitungen, mit einer in die Rohrleitung eingesetzten Kammer (1), die ein in die Kammer (1) hineinragendes Rohrleitungstück (3) am Kammereintritt und eine mit dem fortgesetzten Teil (7) der Rohrleitung verbundene Austrittsöffnung am Kammerausgang aufweist, wobei in der Kammer (1) gegenüber der Mündung des Rohrleitungsstücks (3) eine als Pfeifenresonator ausgebildetete Abdeckkappe (4) angeordnet ist, deren Seitenwand das Rohrleitungsstück (3) auf einem Teil seiner Länge konzentrisch derart umschließt, dass zwischen der Seitenwand und dem Rohrstück (3) ein Ringkanal (5) mit der lichten Weite dₖ verbleibt, wobei die Durchmesser D_{K} der Abdeckkappe (4) und d des Rohrleitungsstücks (3), die lichte Weite dₖ des Ringkanals (5) und der Abstand l_{pf} zwischen der Mündung des Rohrleitungsstücks (3) und der Abdeckkappe (4) in Abhängigkeit der oberen Grenzfrequenz f_{og} der zu dämmenden Schallwellen so dimensioniert werden, dass
a) die Ungleichungen dₖ <= d und dₖ <= l_{pf}
erfüllt sind,
dadurch gekennzeichnet, dass gleichzeitig die Ungleichung
l_{pf} <= d und
b) die Gleichung D_{K} = d + 2 ∗ dₖ/(2 ∗ f_{og})
erfüllt sind.

2. Vorrichtung nach Anspruch 1, dadurch gekennzeichnet, dass die lichte Weite dₛ des Ringspalts (6) zwischen der Abdeckkappe (4) und der Innenwand der Kammer (1) mit der lichten Weite dₖ des Ringkanals (5) zwischen der Abdeckkappe (4) und dem Rohrleitungsstück (3) übereinstimmt.

3. Vorrichtung nach Anspruch 1 - 2 , dadurch gekennzeichnet, dass der Ringspalt (6) zwischen der Abdeckkappe (4) und der Innenwand der Kammer (1) als Interferenzdämpfer für eine vorgegebene Schallfrequenz ausgebildet ist und hinsichtlich seiner Länge l₁ so dimensioniert wird, dass die Gleichung l₁ = c/(4 ∗ fᵣ) erfüllt ist, wobei c die Schallgeschwindigkeit und fᵣ die vorgegebene Schallfrequenz der zu dämmenden Schallwellen ist.

4. Vorrichtung nach Anspruch 3, dadurch gekennzeichnet, dass die Länge l₁ des Ringspalts (6) doppelt so groß ist, wie der Abstand l_{pf} zwischen der Mündung des Rohrleitungsstücks (3) und der Abdeckkappe (4).

5. Vorrichtung nach Anspruch 1 - 4, dadurch gekennzeichnet, dass die Wände der Abdeckkappe (4) aus Lochblechen bestehen.

6. Vorrichtung nach Anspruch 1 - 5, dadurch gekennzeichnet, dass die Austrittsöffnung ebenfalls mit einem in die Kammer (1) hineinragenden Rohrleitungsstück (3) verbunden ist.

7. Vorrichtung nach Anspruch 6, dadurch gekennzeichnet, dass gegenüber der Mündung des Rohrleitungsstücks (3) am Kammerausgang ein weiterer, aus einer Abdeckkkappe (4) bestehender, in gleicher Weise dimensionierter Pfeifenresonator angeordnet ist, so dass die Kammer (1) zwei seriell hintereinander geschaltete Pfeifenresonatoren aufweist.

8. Vorrichtung nach Anspruch 7, dadurch gekennzeichnet, dass zur zusätzlichen Dämpfung zwischen den beiden Pfeifenresonatoren ein auf die Schallfrequenz der zu dämmenden Schallwellen abgestimmter Helmholtzresonator (11) angordnet ist.

9. Vorrichtung nach Anspruch 1 - 8, dadurch gekennzeichnet, dass die Kammer (1) zusätzlich einen Absorptionsschalldämpfer (10) aufweist.

10. Vorrichtung nach Anspruch 7 - 8, dadurch gekennzeichnet, dass ein zusätzlicher Absorptionsschalldämpfer (10) zwischen den Abdeckkappen (4) in der Kammer (1) angeordnet ist.

11. Vorrichtung nach Anspruch 1, 5 oder 6 , dadurch gekennzeichnet, dass die Kammer (1) mit einer Trennwand (12) versehen ist, in die ein oder mehrere parallel geschaltete Rohrstücke (3) mit darüber angeordneten Abdeckkappen (4) eingebaut sind.

## Claims

1. Device for deadening sound in pipelines, having a chamber (1) which is inserted into the pipeline and has a pipeline section (3), which projects into the chamber (1), at the chamber inlet and has an outlet opening, which is connected to the continuing part (7) of the pipeline, at the chamber outlet, with a cover cap (4) which is in the form of a pipe resonator being arranged within the chamber (1) opposite the opening of the pipeline section (3), the side wall of which cover cap (4) enclosing the pipeline section (3) concentrically over a part of its length in such a way that an annular channel (5) with an inside width dₖ remains between the side wall and the pipe section (3), with the diameter dₖ of the cover cap (4) and d of the pipeline section (3), the inside width dₖ of the annular channel (5) and the distance l_{pf} between the opening of the pipeline section (3) and the cover cap (4) being dimensioned as a function of the upper limiting frequency f_{og} of the sound waves to be deadened in such a way that
a) the inequalities dₖ <= d and dₖ <= l_{pf} are satisfied,
characterized in that the inequality
l_{pf} <= d and
b) the equation D_{K} = d + 2 * dₖ/(2 * f_{og})
are simultaneously satisfied.

2. Device according to Claim 1, characterized in that the inside width dₛ of the annular gap (6) between the cover cap (4) and the inner wall of the chamber (1) corresponds to the inside width dₖ of the annular channel (5) between the cover cap (4) and the pipeline section (3).

3. Device according to Claim 1-2, characterized in that the annular gap (6) between the cover cap (4) and the inner wall of the chamber (1), is designed as an interference damper for a predetermined sound frequency and dimensioned with respect to its length l₁ so as to satisfy the equation l₁ =c/(4 * fᵣ), c being the sound velocity and fᵣ being the predetermined sound frequency of the sound waves that are to be deadened.

4. Device according to Claim 3, characterized in that the length l₁ of the annular gap (6) is double the distance l_{pf} between the opening of the pipeline section (3) and the cover cap (4).

5. Device according to Claim 1-5, characterized in that the walls of the cover cap (4) consist of perforated plates.

6. Device according to Claim 1, characterized in that the outlet opening is also connected to a pipeline section (3) projecting into the chamber (1).

7. Device according to Claim 6, characterized in that there is arranged opposite the opening of the pipeline section (3) at the chamber outlet a further, identically dimensioned pipe resonator consisting of a cover cap (4), so that the chamber (1) has two successive pipe resonators connected in series.

8. Device according to Claim 7, characterized in that, for the purpose of providing additional damping, a Helmholtz resonator (11) which is matched to the sound frequency of the sound waves to be damped is arranged between the two pipe resonators.

9. Device according to Claim 1-8, characterized in that the chamber (1) additionally has an absorption sound damper (10).

10. Device according to Claim 7-8, characterized in that an additional absorption sound damper (10) is arranged between the cover caps (4) within the chamber (1) .

11. Device according to Claim 1, 5 or 6, characterized in that the chamber (1) is provided with a dividing wall (12), built into which are one or more pipe sections (3) which are connected in parallel and have cover caps (4) arranged above them.

## Revendications

1. Dispositif pour l'amortissement de bruit dans des conduites tubulaires, comportant une chambre (1) mise en place dans la conduite tubulaire, qui comprend un tronçon de conduite tubulaire (3) pénétrant dans la chambre (1) du côté entrée de chambre et une ouverture de sortie du côté sortie de chambre, ladite ouverture étant en communication avec la partie prolongée (7) de la conduite tubulaire, dans lequel est prévu, dans la chambre (1) vis-à-vis de l'embouchure du tronçon de conduite tubulaire (3), un capuchon de couverture (4) réalisé sous forme de résonateur à pipe dont la paroi latérale entoure concentriquement le tronçon de conduite tubulaire (3) sur une partie de sa longueur, de telle sorte qu'un canal annulaire (5) d'une largeur maximale dₖ reste entre la paroi latérale et le tronçon de tube (3), les diamètres Dₖ du capuchon de couverture (4) et d du tronçon de conduite tubulaire (3), la largeur maximale dₖ du canal annulaire (5) et la distance l_{pf} entre l'embouchure du tronçon de conduite tubulaire (3) et le capuchon de couverture (4) étant dimensionnés en dépendance de la fréquence limite supérieure f_{og} des ondes sonores à amortir, de telle sorte que :
a) les inéquations dₖ <= d et dₖ <= l_{pf}
sont satisfaites,
caractérisé en ce que l'inéquation
l_{pf} <= d et
b) l'équation Dₖ = d + 2 ∗ dₖ/(2∗f_{og})
sont simultanément satisfaites.

2. Dispositif selon la revendication 1, caractérisé en ce que la largeur maximale dₛ de la fente annulaire (6) entre le capuchon de couverture (4) et la paroi intérieure de la chambre (1) coïncide avec la largeur maximale dₖ du canal annulaire (5) entre le capuchon de couverture (4) et le tronçon de conduite tubulaire (3).

3. Dispositif selon les revendications 1 et 2, caractérisé en ce que la fente annulaire (6) entre le capuchon de couverture (4) et la paroi intérieure de la chambre (1) est réalisée sous forme d'amortisseur à interférence pour une fréquence sonore donnée, et en ce qu'elle est dimensionnée, quant à sa longueur l₁, de telle sorte que l'équation l₁ = c/(4 ∗ fᵣ) est satisfaite, c étant la vitesse du son et fᵣ étant la fréquence sonore donnée des ondes sonores à amortir.

4. Dispositif selon la revendication 3, caractérisé en ce que la longueur l₁ de la fente annulaire (6) est deux fois plus grande que la distance l_{pf} entre l'embouchure du tronçon de conduite tubulaire (3) et le capuchon de couverture (4).

5. Dispositif selon les revendications 1 à 4, caractérisé en ce que les parois du capuchon de couverture (4) sont constituées par des tôles perforées.

6. Dispositif selon les revendications 1 à 5, caractérisé en ce que l'ouverture de sortie est également en communication avec un tronçon de conduite tubulaire (3) pénétrant dans la chambre (1).

7. Dispositif selon la revendication 6, caractérisé en ce qu'il est prévu, en vis-à-vis de l'embouchure du tronçon de conduite tubulaire (3), du côté sortie de chambre, un autre résonateur à pipe constitué par un capuchon de couverture (4) et dimensionné de la même manière, de sorte que la chambre (1) comprend deux résonateurs à pipe agencés en série l'un derrière l'autre.

8. Dispositif selon la revendication 7, caractérisé en ce qu'il est prévu pour l'amortissement supplémentaire entre les deux résonateurs à pipe, un résonateur de Helmholtz (11) adapté à la fréquence sonore des ondes sonores à amortir.

9. Dispositif selon les revendications 1 à 8, caractérisé en ce que la chambre (1) comprend en supplément un amortisseur de bruit par absorption (10).

10. Dispositif selon les revendications 7 et 8, caractérisé en ce qu'un amortisseur de bruit par absorption (10) est agencé entre les capuchons de couverture (4) dans la chambre (1).

11. Dispositif selon les revendications 1, 5 ou 6, caractérisé en ce que la chambre (1) est pourvue d'une paroi de séparation (12) dans laquelle sont montés un ou plusieurs tronçons de tube (3) branchés en parallèle avec des capuchons de couverture (4) agencés au-dessus.
